(19) Europäisches Patentamt
European Patent Office
Office européen des brevets

(11) **EP 2 734 975 B1**

(12) **FASCICULE DE BREVET EUROPEEN**

(45) Date de publication et mention de la délivrance du brevet:
**24.06.2015 Bulletin 2015/26**

(21) Numéro de dépôt: **12737811.5**

(22) Date de dépôt: **20.07.2012**

(51) Int Cl.:
***G06T 5/00*** *(2006.01)*

(86) Numéro de dépôt international:
**PCT/EP2012/064347**

(87) Numéro de publication internationale:
**WO 2013/014110 (31.01.2013 Gazette 2013/05)**

(54) **PROCÉDÉ DE RÉDUCTION DU BRUIT DANS UNE SÉQUENCE D'IMAGES FLUOROSCOPIQUES PAR FILTRAGE TEMPOREL ET SPATIAL**

VERFAHREN ZUR RAUSCHMINDERUNG IN FLUOROSKOPISCHEN BILDSEQUENZEN DURCH RÄUMLICH-ZEITLICHE FILTERUNG

METHOD FOR NOISE REDUCTION IN A FLUOROSCOPIC IMAGE SEQUENCE BY SPATIO-TEMPORAL FILTERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.07.2011 FR 1102306**

(43) Date de publication de la demande:
**28.05.2014 Bulletin 2014/22**

(73) Titulaire: **THALES**
**92200 Neuilly-sur-Seine (FR)**

(72) Inventeurs:
• PESCATORE, Jérémie
  **F-38260 La Frette (FR)**
• AMIOT, Carole
  **F-38000 Grenoble (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 2 151 193      WO-A1-2009/100032**
**US-B1- 7 542 622**

• M. TOMIC ET AL: "Adaptive spatio-temporal denoising of fluoroscopic X-ray sequences", BIOMEDICAL SIGNAL PROCESSING AND CONTROL, vol. 7, no. 2, 5 mars 2011 (2011-03-05), pages 173-179, XP055021074, ISSN: 1746-8094, DOI: 10.1016/j.bspc.2011.02.003

**Description**

L'invention se situe dans le domaine de l'imagerie par rayons X et, plus spécifiquement, celui de l'imagerie médicale par fluoroscopie. Elle concerne un procédé de réduction du bruit dans une séquence d'images fluoroscopiques acquises par un détecteur à rayons X.

Dans le domaine de l'imagerie médicale, l'imagerie par fluoroscopie à rayons X permet de fournir un flux d'images d'un patient à un médecin lors d'interventions chirurgicales dites minimalement invasives, par exemple la chimio-embolisation du foie, la vertébroplastie, la cathérisation des anévrismes ou le traitement des rétrécissements vasculaires. Les images peuvent notamment aider le guidage d'instruments chirurgicaux. Une intervention guidée par fluoroscopie est typiquement réalisée en faisant passer un cathéter à l'intérieur du réseau vasculaire du patient. Un agent de contraste peut ou non avoir été injecté préalablement dans le réseau vasculaire afin de l'opacifier et d'améliorer la visibilité des vaisseaux. Une telle intervention est généralement relativement longue et la dose de rayons X auxquels le patient est soumis doit être limitée afin d'éviter d'occasionner des lésions ou des brûlures des tissus. Du fait de cette limitation de la dose de rayons X utilisée, les images fluoroscopiques obtenues comportent un niveau de bruit relativement élevé, et donc un rapport contraste sur bruit relativement faible, rendant les images difficilement lisibles.

Des traitements de filtrage sont mis en oeuvre afin de diminuer le bruit quantique présent dans ces images et augmenter leur rapport contraste sur bruit.

Un traitement connu sous le nom de traitement de réduction du bruit fluoroscopique, ou traitement FNR selon le sigle de l'expression anglo-saxonne "Fluoroscopic Noise Reduction", est ainsi généralement réalisé sur les images acquises par le détecteur à rayons X. L'objectif de ce traitement FNR est de filtrer le bruit présent dans l'image tout en préservant le contraste de l'information présente dans cette image. Le traitement FNR est réalisé en appliquant un filtre temporel aux régions des images où il n'y a pas de déplacement. L'existence ou l'absence de déplacements dans des régions de l'image est détectée à partir de la variation individuelle de l'intensité de chacun des pixels considérés séparément. Un pixel est considéré comme étant en déplacement lorsque sa variation d'intensité entre deux images dépasse un seuil lié à l'écart type du bruit. Ces pixels déterminés comme étant en déplacement ne sont pas, ou très peu, filtrés. En revanche, un traitement par filtrage temporel récursif est appliqué aux pixels déterminés comme étant fixes. Le traitement FNR présente l'avantage de ne pas colorer le bruit spatialement. Autrement dit, il ne fait pas apparaître d'objets fictifs résultant de groupements de pixels d'intensités voisines entre elles. Cependant, le traitement FNR présente une capacité de débruitage relativement limitée et tend à faire disparaître les objets d'intérêts dans l'image.

A côté du traitement par filtrage temporel FNR, les traitements par filtrage spatial présente des propriétés intéressantes. Parmi les différentes variantes de traitement par filtrage spatial, le filtrage par transformation de l'image dans le domaine des ondelettes est l'une des techniques les plus utilisées. La théorie des ondelettes, introduite dans les années 1980, a été développée à partir de la transformée de Fourier. La transformée de Fourier est utilisée pour décrire de nombreux phénomènes physiques. Elle constitue en effet un outil mathématique performant pour décrire de nombreux phénomènes physiques, notamment les phénomènes physiques modélisés par des signaux stationnaires. En revanche, les représentations des phénomènes physiques modélisés par des signaux non stationnaires ne sont généralement pas satisfaisantes. En particulier, la transformée de Fourier est incapable de localiser les portions du signal où la fréquence change subitement. Pour y remédier, une transformée de Fourier à fenêtres a été développée. Elle consiste à multiplier le signal par une fenêtre de dimension donnée. L'analyse devient donc locale, la dimension de la fenêtre déterminant la résolution temporelle obtenue, ou la résolution spatiale dans le cas de signaux à deux dimensions. La théorie des ondelettes s'appuie sur la transformée de Fourier à fenêtres. Elle s'en différencie de par le fait qu'elle permet, au cours de la transformation, de changer la dimension de la fenêtre. Pour cette raison, on parle d'analyse multirésolution ou analyse multi-échelle. Une autre différence est que le signal n'est plus décomposé en une somme de sinus et de cosinus, mais selon des fonctions appelées "ondelettes". Les ondelettes présentent l'avantage de transformer l'image en une représentation dite creuse. Par représentation creuse, on entend une représentation nécessitant un faible nombre de paramètres pour représenter fidèlement l'image. Cependant, les ondelettes sont mal adaptées à la représentation de discontinuités de type ligne, telles que les contours d'objets, car leur forme ne leur permet pas d'exploiter la forme des objets. En conséquence, l'information sur ces discontinuités est contenue dans les coefficients de nombreuses échelles. Pour obtenir une faible erreur de reconstruction, il faut donc calculer un grand nombre de coefficients, entraînant un coût de calcul important. Pour une application de fluoroscopie où les images doivent être traitées "en temps réel", c'est-à-dire dans des durées inférieures à la période de rafraichissement des images, ce coût de calcul implique des ressources matérielles importantes.

D'autres théories ont été développées pour réduire la redondance des informations. Il s'agit notamment des ondelettes isotropes et anisotropes, ou encore des arbres duaux orthogonaux ou non.

Au début des années 2000, la théorie des curvelets est apparue. Cette théorie est également fondée sur le principe de l'analyse multi-échelles. La géométrie des curvelets leur permet de tirer profit de la régularité des contours des objets. Une image peut ainsi être représentée par un nombre relativement faible de coefficients. Cependant, la transformation en curvelets présente l'inconvénient d'introduire des artéfacts dans l'image, notamment une coloration spatiale du bruit. L'introduction d'artéfacts est d'autant plus forte que le rapport contraste sur bruit est faible. Or, dans le domaine de l'imagerie par fluoroscopie, le rapport contraste sur bruit est souvent inférieur à 1. La présence d'artéfacts apparaît donc comme étant inévitable et a limité jusque là son utilisation à des images dont le rapport contraste sur bruit est bien plus élevé.

Le document de Tomic M. et al.: "Adaptive spatio-temporal denoising of fluoroscopic X-ray sequences", Biomedical Signal Processing and Control, vol. 7, no. 2, 5 Mars 2011, pages 173-179, publié par Elsevier décrit un système prenant une séquence d'images consécutives et estimant deux images à bruit réduit: le premier en utilisant une transformation d'ondelettes adaptative aux contours, le deuxième par une méthode statistique ICI, et fusionnant ces deux images estimées.

Un but de l'invention est notamment de proposer un traitement de débruitage adapté aux images fluoroscopiques dont le rapport contraste sur bruit est relativement faible. En particulier, le traitement de débruitage doit présenter une forte capacité de débruitage, engendrer un faible coût de calcul, limiter la perte des objets d'intérêt dans l'image, et ne pas introduire d'artéfacts. A cet effet, l'invention a pour objet un procédé de réduction du bruit dans une séquence d'images fluoroscopiques acquises par un détecteur à rayons X, chaque image étant formée dans le domaine spatial d'une matrice de pixels, chaque pixel ayant une valeur représentative d'un niveau de signal, le procédé comprenant les étapes successives suivantes pour chaque image :

- appliquer un filtrage temporel sur l'image acquise à un instant n, l'application dudit filtrage temporel comportant les sous-étapes suivantes pour chaque pixel de l'image :

  - déterminer une différence entre la valeur du pixel considéré dans l'image acquise à l'instant n et la valeur du pixel correspondant dans l'image acquise à un instant n-1 sur laquelle le filtrage temporel a été appliqué,
  - si la différence est inférieure à un premier seuil prédéterminé, corriger la valeur du pixel correspondant avec un premier ensemble de paramètres,
  - si la différence est supérieure à un deuxième seuil prédéterminé, corriger la valeur du pixel correspondant avec un deuxième ensemble de paramètres,

- appliquer un filtrage spatial sur l'image acquise à l'instant n, l'application dudit filtrage spatial comportant les sous-étapes suivantes :

  - transformer l'image acquise à l'instant n du domaine spatial au domaine des curvelets par une transformation en curvelets, chaque image dans le domaine des curvelets étant représentée par un ensemble de coefficients,

- seuiller les coefficients de l'image par une fonction de seuillage, la fonction de seuillage annulant les coefficients inférieurs à un troisième seuil prédéterminé, et conservant ou ajustant les coefficients supérieurs au troisième seuil prédéterminé,

- transformer l'image dont les coefficients ont été seuillés du domaine des curvelets au domaine spatial par une transformation en curvelets inverse.

L'étape de transformation de l'image acquise à l'instant n dans le domaine des curvelets utilise avantageusement une transformée en curvelets à 6 ou 9 échelles, et/ou 16 orientations.

Selon une première forme particulière de réalisation, l'étape de transformation de l'image acquise à l'instant n dans le domaine des curvelets utilise une transformée en curvelets discrète par USFFT.

Selon une deuxième forme particulière de réalisation, l'étape de transformation de l'image acquise à l'instant n dans le domaine des curvelets utilise une transformée en curvelets discrète par wrapping.

La fonction de seuillage du filtrage spatial peut être une fonction de seuillage dur, c'est-à-dire une fonction de seuillage selon laquelle les coefficients sont annulés s'ils sont inférieurs au troisième seuil prédéterminé, et conservés sinon.

Le troisième seuil prédéterminé $T_S$ du filtrage spatial peut être déterminé par les étapes successives suivantes :

- créer une image $Y$ de mêmes dimensions que l'image acquise à l'instant n et de valeur uniforme 1 sur tous les pixels,
- transformer l'image $Y$ par une transformée de Fourier,
- normaliser l'amplitude F du pic dans la transformée de Fourier de l'image $Y$ par la relation :

$$|F| = \frac{6}{5} \frac{F}{\sqrt{M \times P}}$$

où M et P désignent les dimensions de l'image $Y$,
- transformer la transformée de Fourier de l'image $Y$ du domaine spatial au domaine des curvelets par une transformation en curvelets, chaque image dans le domaine des curvelets étant représentée par un ensemble de coefficients $c_{j,l,k}^{Y}$,
- déterminer une norme $\hat{c}_{j,l}^{Y}$ des coefficients

$c_{j,l,k}^{Y}$ par la relation :

$$\hat{c}_{j,l}^{Y} = \sqrt{\frac{\sum_{l}\left|c_{j,l,k}^{Y}\right|^{2}}{M \times P}}$$

où M et P désignent les dimensions de l'image Y et l désigne les orientations des curvelets,

■ déterminer le seuil prédéterminé $T_{S}$ par la relation :

$$T_{S} = r.\hat{c}_{j,l}^{Y}.\sigma$$

où $\sigma$ est l'écart type du bruit dans l'image acquise à l'instant n et sur laquelle le filtrage temporel a été appliqué, et où le facteur r prend la valeur 0 pour l'échelle la plus grossière des curvelets, la valeur 4 pour l'échelle la plus fine, et la valeur 1 pour les autres échelles.

Selon une forme particulière de réalisation, l'étape d'application du filtrage temporel sur l'image acquise à l'instant n comprend, à la suite de la sous-étape de détermination de la différence entre la valeur du pixel considéré dans l'image acquise à l'instant n et la valeur du pixel correspondant dans l'image acquise à l'instant n-1 sur laquelle le filtrage temporel a été appliqué, la sous-étape supplémentaire suivante :

■ si la différence est comprise entre le premier seuil prédéterminé et le deuxième seuil prédéterminé, corriger la valeur du pixel correspondant avec un troisième ensemble de paramètres.

En résumé, le procédé de réduction de bruit selon l'invention comporte successivement un filtrage temporel et un filtrage spatial par transformation en curvelets. L'ordre dans lequel sont effectués les filtrages présente une importance en ce qui concerne la coloration du bruit. En effet, le filtrage spatial par transformation en curvelets introduit des artéfacts s'il n'est pas précédé du filtrage temporel. Par ailleurs, l'invention a notamment pour avantage de ne pas nécessiter d'a priori de formes pour le filtrage spatial.

L'invention sera mieux comprise et d'autres avantages apparaîtront à la lecture de la description qui va suivre, faite en regard de dessins annexés sur lesquels :

- la figure 1 représente un exemple de points pris en compte pour déterminer le contraste d'un objet dans une image fluoroscopique ;
- la figure 2 représente des étapes possibles du procédé de réduction de bruit selon l'invention ;
- les figures 3A et 3B représentent par des courbes une fonction de seuillage dur et une fonction de seuillage doux, respectivement ;
- la figure 4 illustre, par un graphique, la performance de ce procédé de réduction de bruit pour une séquence d'images fluoroscopiques représentant un objet ayant un mouvement de translation et de rotation ;
- la figure 5 représente un exemple de sous-étapes du procédé de réduction de bruit permettant de réaliser un filtrage spatial ;
- la figure 6 représente un exemple de fonction de seuillage utilisée pour le filtrage spatial de la figure 5.

Pour la suite de la description, on considère une séquence d'images fluoroscopiques $x_{n}$ acquises par un détecteur à rayons X, où n désigne les différents instants d'acquisition dans la séquence. Chaque image est composée d'une matrice de pixels ayant chacun une valeur $x_{n}(m, p)$ représentative d'un niveau de signal, avec m et p désignant respectivement la ligne et la colonne de la matrice. La valeur est par exemple une valeur numérique comprise entre 0 et 255. La valeur numérique est ainsi codée sur 8 bits. Elle peut également être codée sur 14 bits. Le rapport contraste sur bruit (CNR) est défini comme suit :

$$CNR = \frac{\left|contraste - bruit\right|}{\sigma}$$

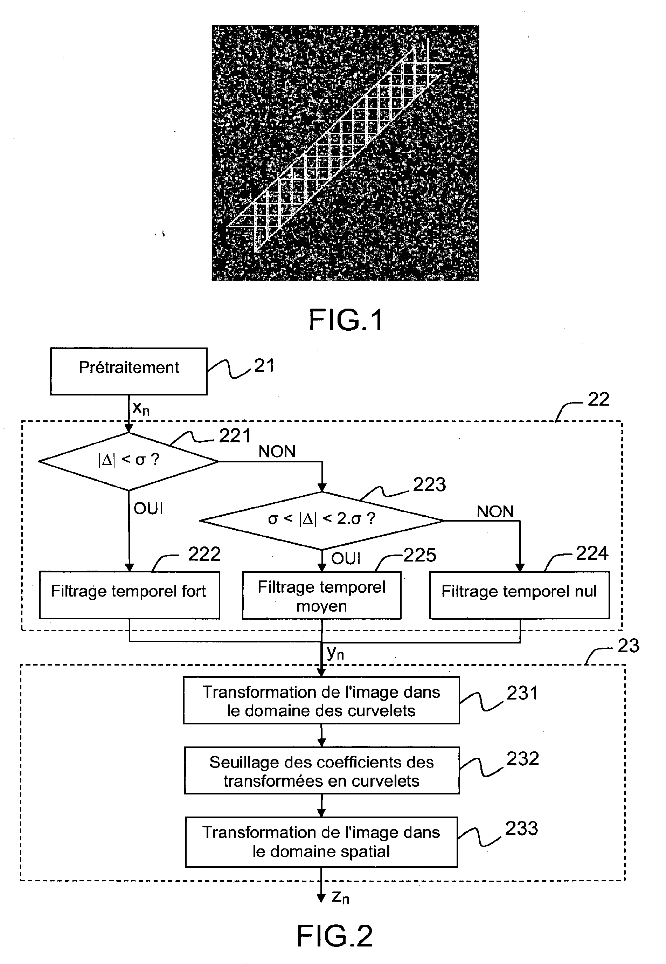

où le bruit est de préférence déterminé sur une zone de l'image où il n'y a pas d'objets d'intérêt, où le contraste est de préférence déterminé à partir de points correspondant à un objet d'intérêt dans l'image, et où $\sigma$ désigne l'écart type du bruit, c'est-à-dire l'écart type des valeurs de pixels correspondant à une zone de l'image ne comportant pas d'objets d'intérêt. La figure 1 représente les points considérés (en blanc) pour déterminer le contraste d'une endoprothèse vasculaire, mieux connue sous la dénomination anglo-saxonne de "stent".

La figure 2 représente des étapes possibles pour le procédé de réduction de bruit dans la séquence d'images fluoroscopiques. Le procédé est décrit pour l'image $x_{n}$ acquise à l'instant n. Il peut cependant être appliqué successivement sur chacune des images de la séquence.

Dans une première étape 21, l'image $x_{n}$ est traitée par une chaîne de prétraitement. Le prétraitement peut notamment comporter des regroupements de pixels adjacents dans l'image. Les pixels peuvent être regroupés par exemple en fonction de la résolution souhaitée ou du niveau de bruit souhaité. Le prétraitement peut également comporter une phase d'étalonnage du détecteur à rayons X. En particulier, le gain et l'offset à appliquer à chaque pixel du détecteur peuvent être déterminés. En outre, l'étalonnage peut également comprendre une identification des pixels prenant une valeur aléatoire ou une valeur constante quel que soit le rayonnement reçu. Ces pixels défectueux peuvent être corrigés en interpolant leur valeur par les valeurs des pixels voisins. Le prétraitement peut aussi comporter une remise à l'échelle des images, c'est-à-dire un ajustement global de la valeur de tous les pixels de chaque image, de manière à ce que la valeur moyenne des pixels soit constante pour toutes les images de la séquence. Enfin, le prétraitement peut comporter une sous-étape d'adaptation des images. Étant donnée la physique des rayons X, le bruit présent dans chaque image $x_n$ est un bruit poissonien. Or un tel bruit est inadapté aux traitements de réduction de bruit. De plus, chaque image $x_n$ est une image représentative des atténuations des rayons X, alors qu'une image des épaisseurs radiologiques est plus naturelle à analyser. La formule d'Ascombe permet d'obtenir une image des épaisseurs radiologiques avec un bruit pseudo-gaussien :

$$x_n(m, p) = 2\sqrt{x_{0,n}(m, p) + \frac{3}{8}}$$

où $x_{0,n}(m, p)$ est la valeur du pixel $(m, p)$ avant la sous-étape d'adaptation de l'image $x_n$.

Dans une deuxième étape 22, l'image $x_n$ est filtrée par un filtre temporel. Le filtrage temporel est par exemple un filtrage appelé "Fluoroscopic Noise Reduction" (FNR). Ce filtrage est décrit notamment dans le brevet US 6,314,160 B1. Soit $y_n$ l'image $x_n$ obtenue après le filtrage temporel. On note $\Delta(m, p)$, la différence entre la valeur $x_n(m, p)$ dans l'image $x_n$ acquise à l'instant n et la valeur $y_{n-1}(m, p)$ dans l'image filtrée $y_{n-1}$ correspondant à l'acquisition à l'instant n-1 :

$$\Delta(m, p) = x_n(m, p) - y_{n-1}(m, p)$$

Pour alléger les notations, on notera simplement $x_n$ la valeur d'un pixel de l'image $x_n$, $y_n$ la valeur d'un pixel de l'image $y_n$ et $\Delta$ la différence entre les deux valeurs $x_n$ et $y_{n-1}$ du pixel considéré. Le filtrage FNR se décline selon deux modes, appelés mode adaptatif et mode non adaptatif. Le mode adaptatif est appelé ainsi du fait de sa prise en compte du mouvement des objets. Le filtrage FNR consiste à comparer pixel à pixel, la différence $\Delta$ à des seuils prédéterminés. Le premier seuil $S_1$ correspond à une différence $\Delta$ relativement faible. Le deuxième seuil $S_2$ correspond à une différence $\Delta$ relativement forte. Le filtrage FNR est alors paramétré par des coefficients $\alpha$ et $\beta$ en fonction du résultat de cette différence $\Delta$ et du mode considéré. On note $a$ la force du filtre :

$$a = \frac{\sigma_y^2}{\sigma_y^2 + \sigma_x^2}$$

où $\sigma_x$ est l'écart type dans l'image $x_n$ et où $\sigma_y$ est l'écart type dans l'image $Y_{n-1}$.

On définit aussi les constantes $AA, BB, CC$ et $DD$, comme suit :

- $AA = \frac{1-a}{2.\sigma_x}$
- $BB = 2\alpha - 1$
- $CC = \frac{\sigma(1-a)}{2}$
- $DD = \frac{3}{2}\sigma(1 - a)$

Pour le mode adaptatif, les seuils $S_1$ et $S_2$ sont définis comme suit :

- $S_1 = \sigma$
- $S_2 = 2\sigma$

et les coefficients $\alpha$ et $\beta$ sont déterminés comme suit :

- si $|\Delta| < S_1$, $\begin{cases} \alpha = a \\ \beta = 0 \end{cases}$

- si $S_1 < |\Delta| \ S_2$, $\begin{cases} \alpha = \frac{AA.\Delta^2 + BB.|\Delta| + CC}{|\Delta|} \\ \beta = 0 \end{cases}$

- sinon, $\begin{cases} \alpha = 1 - \frac{DD}{|\Delta|} \\ \beta = 0 \end{cases}$

Pour le mode non adaptatif, les seuils $S_1$ et $S_2$ sont définis comme suit :

- $S_1 = 2\sigma$
- $S_2 = \frac{2.\sigma}{\sqrt{a}}$

et les coefficients $\alpha$ et $\beta$ sont déterminés comme suit :

- si $|\Delta| < S_1$, $\begin{cases} \alpha = a \\ \beta = 0 \end{cases}$

- si $S_1 < |\Delta| < S_2$, $\begin{cases} \alpha = \frac{a.\Delta^2}{3(2.\sigma)^2} \\ \beta = \frac{4}{3}\sigma.a \end{cases}$

- sinon, $\begin{cases} \alpha = 1 \\ \beta = \frac{a}{3} - \frac{4.\sigma}{\sqrt{a}} \end{cases}$

Le filtrage FNR proprement dit consiste à déterminer une nouvelle valeur $y_n$ pour chaque pixel de l'image à partir de sa valeur $x_n$ et des coefficients $\alpha$ et $\beta$:

$$y_n = \alpha.x_n + (1 - \alpha)y_{n-1} + \beta$$

Autrement dit, la valeur $x_n$ de chaque pixel est corrigée à partir des coefficients $\alpha$ et $\beta$. Sur la figure 2, l'étape 22 de filtrage FNR est représentée pour le mode adaptatif.

A titre d'exemple, dans une première sous-étape 221, la valeur absolue de la différence Δ est comparée pour chaque pixel $x_n$ au seuil $S_1$, à savoir l'écart type σ. Si la valeur absolue de la différence Δ est inférieure au seuil $S_1$, le pixel considéré représente probablement un niveau de bruit et un filtrage dit fort est appliqué dans une sous-étape 222 avec les paramètres correspondants. Sinon, dans une sous-étape 223, la valeur absolue de la différence Δ est comparée pour chaque pixel $x_n$ au seuil $S_2$, à savoir 2σ. Si la valeur absolue de la différence Δ est supérieure au seuil $S_2$, le pixel considéré correspondant probablement à un point de l'objet ayant bougé et un filtrage dit faible est appliqué dans une sous-étape 224 avec les paramètres correspondants. Enfin, si la valeur absolue de la différence Δ est comprise entre les seuils $S_1$ et $S_2$, une incertitude existe. Afin d'obtenir une fonction continue entre le filtrage fort et le filtrage faible, un filtrage moyen est appliqué dans une sous-étape 225 avec les paramètres correspondants.

Dans une troisième étape 23, l'image $y_n$ obtenue après filtrage temporel est filtrée par un filtre spatial basé sur la transformée en curvelets. La théorie des curvelets utilise le principe des espaces multirésolution ou multi-échelle, une échelle correspondant à un niveau de partition de l'espace. L'espace est partitionné en curvelets dont les enveloppes sont de dimensions $2^j$ x $2^{j/2}$, où j est un entier positif désignant l'échelle. Chaque curvelet dépend du nombre d'échelles considérées, de sa position dans l'image et de son orientation. Pour chaque échelle, la meilleure approximation possible de l'image est calculée. D'une échelle à l'autre, seules les améliorations obtenues sont représentées. Le nombre d'échelles détermine la qualité de la reconstruction de l'image. Avec les curvelets, un nombre d'échelles compris entre 6 et 10 permet de fournir des résultats très satisfaisants en termes de rapport contraste sur bruit.

Dans une première sous-étape 231 de l'étape de filtrage spatial 23, l'image $y_n$ est transformée du domaine spatial au domaine des curvelets par une transformation en curvelets. De préférence, une transformation en curvelets discrète est utilisée. Une telle transformation est notamment décrite dans E. Candès, Demanet L., Donoho D. and Ying L., "Fast Discrete Curvelet Transforms", Multiscale Model. Simul., vol. 5, no. 3, 2006, pp. 861-899. Sous leur forme discrète, les curvelets ne peuvent pas être échantillonnées selon les grilles de l'espace de Fourier. Le document de Donoho et al propose ainsi deux solutions pour translater les curvelets à échelle et orientation données sur la grille spatiale. Une première solution pour transformer l'image dans le domaine des curvelets discrètes est appelée transformée en curvelets discrète via USFFT, où USFFT est le sigle anglo-saxon pour "unequally-spaced fast Fourier transform" (USFFT), que l'on peut traduire en français par "transformée de Fourier rapide pour données à répartition irrégulière". Dans cette solution, la grille de translation est inclinée de manière à être alignée dans la direction des curvelets à échelle et angle donnés. Une deuxième solution est appelée transformée en curvelets discrète via wrapping, où le terme "wrapping" peut être traduit en français par "enroulement". Dans cette solution, la grille de translation est identique pour tous les angles d'un même quadrant à une échelle donnée. Cela implique que le nombre d'angles utilisés pour la transformée soit un multiple de 4. La transformée en curvelets via USFFT est plus fidèle à la théorie continue des curvelets que la transformée en curvelets via wrapping. Cependant, son coût de calcul est plus important. Dans les deux solutions, la transformée en curvelets de l'image $y_n$ peut être représentée par un ensemble de coefficients $c_n^D(j, l, k)$, où l'exposant D fait référence à la transformée discrète, et où j, l et k désignent respectivement l'échelle, l'orientation et la position de la curvelet considérée. Selon une forme préférentielle de réalisation du filtre spatial, le nombre d'échelles utilisées est égal à 9. Selon une autre forme de réalisation, le nombre d'échelles utilisées est égal à 6. Cette dernière forme de réalisation implique un nombre plus faible de coefficients à calculer et donc une durée de traitement inférieure. Par ailleurs, le nombre d'orientations utilisées est avantageusement égal à 16. Ce nombre présente un bon compromis entre la résolution en orientation et le coût de calcul des curvelets, notamment pour des images réelles dont les courbes nécessitent un grand nombre d'orientations pour les approcher. De plus, le nombre 16 étant un multiple de 4, il facilite la transformée en curvelets par wrapping.

Dans une deuxième sous-étape 232 de l'étape de filtrage spatial 23, les coefficients $c_n^D(j, l, k)$ de l'image $y_n$ sont seuillés par une fonction de seuillage. L'étape de seuillage 232 est basée sur l'hypothèse selon laquelle certains coefficients $c_n^D(j, l, k)$ représentent le bruit alors que d'autres contiennent l'information utile. L'étape de seuillage 232 consiste donc à identifier et à supprimer les coefficients ne contenant pas d'informations utiles. La fonction de seuillage se caractérise d'une part par sa forme et d'autre part par son seuil T. Il existe principalement deux fonctions de seuillage, la fonction de seuillage dit doux et la fonction de seuillage dit dur. En simplifiant la notation des coefficients par $c_n$ et en appelant $\hat{c}_n$ les coefficients seuillés, la fonction de seuillage dur peut être modélisée comme suit :

$$\hat{c}_n = \begin{cases} 0 \ si \ |c_n| \leq T \\ c_n \ sinon \end{cases}$$

La fonction de seuillage doux peut être modélisée comme suit :

$$\hat{c}_n = \begin{cases} 0 \ si \ |c_n| \leq T \\ c_n - T.signe(c_n) \ sinon \end{cases}$$

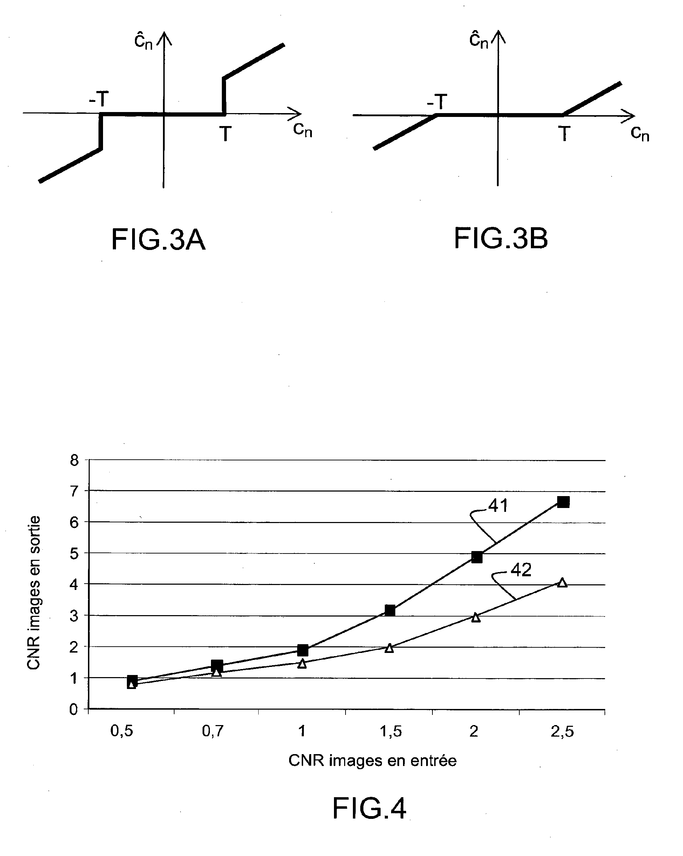

La figure 3A représente par une courbe 31 la fonction de seuillage dur et la figure 3B représente par une courbe 32 la fonction de seuillage doux. La fonction de seuillage doux a une capacité de débruitage plus importante que la fonction de seuillage dur. En revanche, elle modifie la valeur des pixels en fonction du seuil $T$ choisi. Il en résulte une perte de précision sur certains détails de l'image. La détermination du seuil $T$ est une étape cruciale car elle détermine la performance du filtrage spatial, tant en ce qui concerne la capacité de débruitage que l'introduction d'artéfacts.

Selon une première forme de réalisation, le seuil $T$ est déterminé comme étant le seuil universel $T_U$ décrit notamment dans D.L. Donoho and Johnstone, I.M., "Ideal spatial adaptation via wavelet shrinkage", Biometrica, vol. 81, 1994, pp. 425-455. Ce seuil $T_U$ est défini par la relation suivante :

$$T_U = \sigma \sqrt{2 \frac{logN}{N}}$$

où $N$ est le nombre d'échantillons, c'est-à-dire ici le nombre de pixels dans l'image $y_n$. Le seuil universel $T_U$ n'est pas optimal et peut introduire des artéfacts. Néanmoins, des seuils proportionnels au seuil universel $T_U$ peuvent présenter de bons résultats si le facteur de proportionnalité est bien choisi.

Selon une deuxième forme de réalisation, le seuil $T$ est déterminé par la méthode décrite dans J.L. Starck, Candès I.J. and Donoho L., "The Curvelet Transform for Image Denoising", IEEE Transactions on Image Processing, vol. 11, no. 6, 2002, pp. 670-684. Cette méthode consiste à créer une image, notée $Y$, de mêmes dimensions que l'image $y_n$ à débruiter et de valeur uniforme 1 sur tous les pixels. L'image $Y$ est transformée par la transformée de Fourier. La fréquence de coordonnées (0,0) dans l'image $Y$ est centrée et son amplitude est normalisée par les dimensions de l'image. Soit $F$ l'amplitude de la fréquence centrale. Son amplitude normalisée, notée $|F|$, est par exemple réalisée selon la relation suivante :

$$|F| = \frac{6}{5} \frac{F}{\sqrt{M \times P}}$$

où M et P désignent les dimensions de l'image $Y$, c'est-à-dire également de l'image $x_n$ et de l'image $y_n$.

On obtient ainsi une image avec un pic de Dirac centré sur l'image, dont l'amplitude est fonction des dimensions de l'image. Le seuil de cette méthode, noté $T_S$ dépend de l'échelle $j$ et de l'orientation $l$. Il est déterminé en fonction de la norme des coefficients $c_{j,l,k}^Y$ des curvelets de l'image $Y$ pour une échelle $j$ et une orientation

$l$ données. Cette norme $\hat{c}_{j,l}^Y$ est déterminée par la relation suivante :

$$\hat{c}_{j,l}^Y = \sqrt{\frac{\sum_l |c_{j,l,k}^Y|^2}{M \times P}}$$

La fonction de seuillage est une fonction de seuillage dur, définie comme suit :

$$\hat{c}_n = \begin{cases} 0 \ si \ |c_n| \leq T_S = r.\hat{c}_{j,l}^Y.\sigma \\ c_n \ sinon \end{cases}$$

Le facteur multiplicatif r est déterminé en fonction de l'échelle $j$. Pour l'échelle la plus fine (par exemple $j = 9$), le facteur $r$ est égal à 4. Pour les autres échelles, le facteur r est égal à 3. Ces facteurs présentent une bonne capacité de débruitage pour des images présentant un fort rapport contraste sur bruit. Cependant, pour des images fluoroscopiques, des artéfacts sont introduits. Ces artéfacts peuvent être évités en adaptant le facteur $r$. En particulier, pour l'échelle la plus grossière ($j = 1$), le facteur $r$ peut être égal à 0. Il n'y a donc pas de seuillage. Pour l'échelle la plus fine, le facteur $r$ peut encore être égal à 4. Et pour les autres échelles, le facteur $r$ peut être égal à 1.

Dans une troisième sous-étape 233 de l'étape de filtrage spatial 23, l'image $y_n$ est transformée du domaine des curvelets au domaine spatial (matriciel) par une transformation en curvelets inverse. A cet effet, les coefficients seuillés sont utilisés. L'image obtenue après filtrage temporel et filtrage spatial est notée $z_n$.

La figure 4 illustre par un graphique la performance du procédé de réduction de bruit selon l'invention pour une séquence d'images représentant un stent ayant un mouvement de translation et de rotation. Sur le graphique, l'axe des abscisses représente le CNR moyen de la séquence d'images $x_n$ et l'axe des ordonnées représente le CNR moyen de la séquence d'images obtenue après un traitement de réduction de bruit. Une première courbe 41 représente le CNR moyen de la séquence d'images $z_n$ obtenue par le procédé de réduction de bruit selon l'invention, c'est-à-dire par un filtrage temporel suivi d'un filtrage spatial par transformation en curvelets. Une deuxième courbe 42 représente le CNR moyen de la même séquence d'images après traitement par le même filtrage temporel suivi d'un filtrage spatial par transformation en ondelettes. Le graphique montre que pour une séquence d'images à traiter dont le CNR est relativement faible (0,5 - 0,7 - 1), le procédé de réduction de bruit selon l'invention présente une amélioration notable en termes de CNR. La réduction de bruit est encore bien meilleure pour une séquence d'images dont le CNR est plus élevé (1,5 - 2 - 2,5). De plus, le procédé de réduction de bruit selon l'invention permet de réduire significativement l'introduction d'artéfacts.

L'étape 23 de filtrage spatial décrite plus haut permet de réduire efficacement le niveau de bruit dans les images. Cependant, cette étape présente l'inconvénient d'introduire des artefacts apparaissant sous la forme de curvelets, c'est-à-dire des objets présentant des formes allongées et ondulantes. En effet, ces artéfacts sont dus à des coefficients ayant une grande amplitude, mais ne représentent que du bruit. Ils ne sont présents que lorsque le niveau de bruit est élevé, ce qui est le cas des images fluoroscopiques. Une solution consiste à fixer des seuils relativement bas, ce qui réduit les artefacts mais limite les performances en termes de réduction de bruit. La suite de la description décrit une autre méthode pour réaliser l'étape de filtrage spatial permettant de réduire significativement la présence d'artefacts sans réduire les performances du filtrage. Cette méthode repose sur la corrélation qui existe entre un coefficient donné et les coefficients qui lui sont liés, à savoir son coefficient parent, ses coefficients voisins et ses coefficients cousins. En particulier, il est fait l'hypothèse que si un coefficient représente du signal utile, les coefficients qui lui sont liés ont une forte probabilité de représenter également du signal utile. À l'inverse, si le module d'un coefficient est important en raison de la présence d'un artéfact, il est peu probable que les coefficients qui lui sont liés soient aussi impactés par cet artefact.

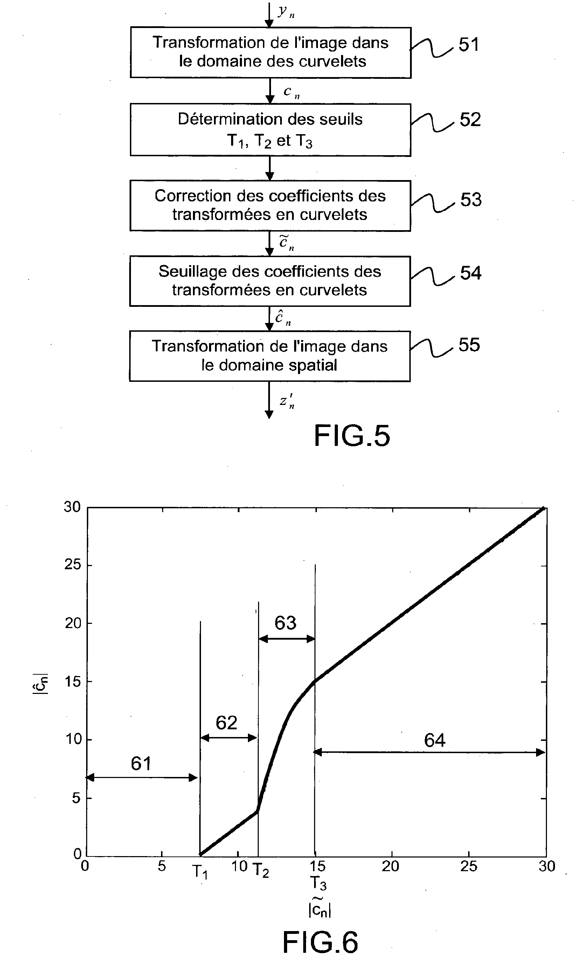

La figure 5 représente un autre exemple de sous-étapes permettant de réaliser l'étape 23 de filtrage spatial. Dans une première sous-étape 51, l'image $y_n$ obtenue après filtrage temporel est transformée du domaine spatial au domaine des curvelets. La transformée en curvelets de l'image $y_n$ est également représentée par des coefficients notés $c_n^D(j,l,k)$, ou $c_n$ sous forme simplifiée. De préférence, la transformation en curvelets est faite avec 6 échelles et 12 orientations. Selon une forme particulière de réalisation, l'image $y_n$ est représentée par des ondelettes pour l'échelle la plus fine, par exemple pour l'échelle $j$ = 5.

Dans une deuxième sous-étape 52, trois seuils notés $T_1$, $T_2$ et $T_3$ sont déterminés tels que $T_1 < T_2 < T_3$. Ces seuils sont déterminés en fonction de l'écart-type $\sigma_{s,\theta}$ de la sous-bande des coefficients. La sous-bande d'un coefficient donné $c_n^D(j,l,k)$ regroupe l'ensemble des coefficients ayant la même échelle $j$ et la même orientation $l$. Il s'agit donc de l'ensemble des positions pour l'échelle et l'orientation considérées. Les seuils $T_1$, $T_2$ et $T_3$ définissent une première zone pour les valeurs inférieures au seuil $T_1$, une deuxième zone pour les valeurs comprises entre les seuils $T_1$ et $T_2$, une troisième zone pour les valeurs comprises entre les seuils $T_2$ et $T_3$, et une quatrième zone pour les valeurs supérieures au seuil $T_3$. À titre d'exemple, on considère les valeurs de seuil suivantes : $T_1$ = 7,5, $T_2$ = 11,25, et $T_3$ =15.

Dans une troisième sous-étape 53, les coefficients sont corrigés en fonction de leur coefficient parent et de leurs coefficients voisins. De préférence, on considère uniquement les coefficients voisins non corrélés. On note $\widetilde{c}_n^D(j,l,k)$, ou $\tilde{c}_n$ sous forme simplifiée, les coefficients corrigés. Pour un coefficient donné $c_n^D(j,l,k)$, son coefficient parent est le coefficient correspondant à l'échelle plus grossière précédente, c'est-à-dire le coefficient $c_n^D(j-1,l,k)$. Ses coefficients voisins sont les coefficients $c_n^D(j,l,k')$ correspondant aux positions voisines $k'$, c'est-à-dire les positions contiguës ayant la même échelle et la même orientation. Pour une position repérée par le couple ($x$, $y$), il s'agit donc des positions ($x$+1, $y$), ($x$-1, $y$), ($x$, $y$+1), ($x$, $y$-1), ($x$+1, $y$+1), ($x$+1, $y$-1), ($x$-1, $y$+1) et ($x$-1, $y$-1). On qualifie de "corrélés" les coefficients voisins situés dans la direction de la sous-bande. Pour chaque coefficient $c_n^D(j,l,k)$, le module de son coefficient parent et la moyenne des modules de ses coefficients voisins non corrélés sont comparés aux seuils $T_1$, $T_2$ et $T_3$. Trois cas sont à considérer. Le premier cas est celui où le module du coefficient considéré $c_n^D(j,l,k)$ se situe soit dans la même zone que le module de son coefficient parent $c_n^D(j-1,l,k)$, soit dans la même zone que la moyenne des modules de ses coefficients voisins $c_n^D(j,l,k')$. Dans ce premier cas, le module du coefficient considéré reste inchangé $(\widetilde{c}_n^D(j,l,k) = c_n^D(j,l,k))$. Le deuxième cas est celui où le module du coefficient parent $c_n^D(j-1,l,k)$ et la moyenne des modules des coefficients voisins $c_n^D(j,l,k')$ se situent dans la même zone, différente de celle du module du coefficient considéré $c_n^D(j,l,k)$. Le module du coefficient corrigé $\widetilde{c}_n^D(j,l,k)$ prend alors la valeur minimale de la zone dans laquelle se situent le module du coefficient parent et la moyenne des modules des coefficients voisins si le module du coefficient considéré $c_n^D(j,l,k)$ se situe dans une zone à plus faibles valeurs, et la valeur maximale de cette zone sinon. Le troisième cas est celui où le module du coefficient considéré $c_n^D(j,l,k)$, le module de son coefficient parent $c_n^D(j-1,l,k)$, et la moyenne des modules de ses coefficients voisins $c_n^D(j,l,k')$ se situent dans trois zones distinctes. Le module du coefficient corrigé $\widetilde{c}_n^D(j,l,k)$ prend alors la valeur minimale de la zone dans laquelle se situe la moyenne des modules des coefficients voisins si le module du coefficient considéré $c_n^D(j,l,k)$ se situe dans une zone à plus faibles valeurs, et la valeur maximale de cette zone sinon. Le troisième cas privilégie la zone des coefficients voisins non corrélés au détriment de la zone du coefficient parent du fait qu'à l'échelle la plus grossière, les coefficients ne possèdent pas de parent. Il serait néanmoins envisageable de corriger les coefficients des autres échelles en fonction de la zone dans laquelle se situe le module de leur coefficient parent.

Dans une quatrième sous-étape 54, les coefficients corrigés $\tilde{c}_n$ sont seuillés par une fonction de seuillage. On note $\hat{c}_n^D(j,l,k)$, ou $\hat{c}_n$ sous forme simplifiée, les coefficients corrigés seuillés. La figure 6 représente la fonction de seuillage correspondant aux valeurs de seuils $T_1$, $T_2$ et $T_3$ considérées. Cette fonction est modélisée comme suit :

$$|\hat{c}_n| = \begin{cases} 0 \; si \; |\tilde{c}_n| < T_1 \\ |\tilde{c}_n| - T_1 \; si \; T_1 \le |\tilde{c}_n| \le T_2 \\ f(\tilde{c}_n) \; si \; T_2 \le |\tilde{c}_n| \le T_3 \\ |\tilde{c}_n| \; si \; |\tilde{c}_n| > T_3 \end{cases}$$

où $f(\tilde{c}_n)$ est une sigmoïde définie comme suit :

$$f(\tilde{c}_n) = \frac{1}{1 + \exp(-\lambda(\tilde{c}_n - m))}$$

Les paramètres $m$ et $\lambda$ sont déterminés de manière à ce que la fonction de seuillage soit continue. Ils sont ainsi définis comme suit :

$$m = \frac{\ln\left(\dfrac{T_1}{T_2 - T_1}\right)T_3 - T_2.\ln(0.01)}{\ln\left(\dfrac{T_1}{T_2 - T_1}\right) - \ln(0.01)}$$

$$\lambda = \frac{-\ln(0.01)}{T_3 - m}$$

La fonction de seuillage annule donc les coefficients dont le module est compris dans la première zone 61, elle applique un seuillage doux aux coefficients dont le module est compris dans la deuxième zone 62, elle applique un seuillage dur aux coefficients dont le module est compris dans la quatrième zone 64, et elle applique un seuillage de transition aux coefficients dont le module est compris dans la troisième zone 63. Le seuillage doux permet de réduire le niveau de bruit, mais il étale les contours.

Le seuillage dur conserve bien les contours mais est moins efficace en termes de réduction de bruit. L'utilisation conjointe de ces deux types de seuillage permet de combiner leurs avantages respectifs en fonction des zones.

Lorsque l'image $y_n$ est représentée par des ondelettes pour l'échelle la plus fine, les coefficients $\tilde{c}_n$ sont seuillés par une fonction de seuillage dur modélisée comme suit :

$$|\hat{c}_n| = \begin{cases} 0 \; si \; |\tilde{c}_n| < T_4 \\ |\tilde{c}_n| \; sinon \end{cases}$$

où le seuil $T_4$ est défini à partir de l'écart-type $\sigma_{s,\theta}$ de la sous-bande du coefficient $c_n$ considéré :

$$T_4 = 4 \times \sigma_{s,\theta}$$

Dans une cinquième sous-étape 55, l'image $y_n$ est transformée du domaine des curvelets au domaine spatial par une transformation en curvelets inverse. À cet effet, les coefficients seuillés corrigés sont utilisés. L'image obtenue après filtrage temporel et filtrage spatial est notée $z_n'$.

Le filtrage spatial décrit en référence à la figure 5 utilise à la fois les coefficients parents et les coefficients voisins non corrélés. Le filtrage spatial pourrait également utiliser les coefficients voisins corrélés, ou l'ensemble des coefficients voisins. Il pourrait aussi utiliser uniquement les coefficients parents ou les coefficients voisins, ou encore combiner ces coefficients avec les coefficients cousins. Ces coefficients sont ceux ayant la même échelle et la même position que le coefficient de référence. Le filtrage spatial pourrait également ne pas comporter de sous-étape de correction des coefficients, la sous-étape 54 de seuillage étant dans ce cas réalisée directement sur les coefficients $c_n$ des transformées en curvelets.

## Revendications

1.  Procédé de réduction du bruit dans une séquence d'images fluoroscopiques acquises par un détecteur à rayons X, chaque image $x_n$ étant formée dans le domaine spatial d'une matrice de pixels, chaque pixel ayant une valeur représentative d'un niveau de signal, ledit procédé **caractérisé par le fait qu'**il comprend les étapes successives suivantes pour chaque image $x_n$ :

    - appliquer un filtrage temporel (22) sur l'image $x_n$ acquise à un instant n, l'application dudit filtrage temporel comportant les sous-étapes suivantes pour chaque pixel de l'image :

- déterminer (221, 223) une différence entre la valeur du pixel considéré dans l'image $x_n$ acquise à l'instant n et la valeur du pixel correspondant dans l'image $y_{n-1}$ acquise à un instant n-1 sur laquelle le filtrage temporel (22) a été appliqué,
- si la différence est inférieure à un premier seuil $S_1$ prédéterminé, corriger (222) la valeur du pixel correspondant avec un premier ensemble de paramètres,
- si la différence est supérieure à un deuxième seuil $S_2$ prédéterminé, corriger (224) la valeur du pixel correspondant avec un deuxième ensemble de paramètres,

   ■ appliquer un filtrage spatial (23) sur l'image $y_n$ acquise à l'instant n, l'application dudit filtrage spatial comportant les sous-étapes suivantes :

- transformer (231, 51) l'image $y_n$ acquise à l'instant n du domaine spatial au domaine des curvelets par une transformation en curvelets, chaque image dans le domaine des curvelets étant représentée par un ensemble de coefficients,
- seuiller (232, 54) les coefficients de l'image $y_n$ par une fonction de seuillage, la fonction de seuillage annulant les coefficients inférieurs à un troisième seuil prédéterminé, et conservant ou ajustant les coefficients supérieurs au troisième seuil prédéterminé,
- transformer (233, 55) l'image $y_n$ dont les coefficients ont été seuillés du domaine des curvelets au domaine spatial par une transformation en curvelets inverse.

2. Procédé selon la revendication 1, dans lequel l'étape (231) de transformation de l'image $y_n$ acquise à l'instant n dans le domaine des curvelets utilise une transformée en curvelets à 6 échelles.

3. Procédé selon la revendication 1, dans lequel l'étape (231) de transformation de l'image $y_n$ acquise à l'instant n dans le domaine des curvelets utilise une transformée en curvelets à 9 échelles.

4. Procédé selon l'une des revendications précédentes, dans lequel l'étape (231) de transformation de l'image $y_n$ acquise à l'instant n dans le domaine des curvelets utilise une transformée en curvelets comprenant 16 orientations.

5. Procédé selon l'une des revendications précédentes, dans lequel l'étape (231) de transformation de l'image $y_n$ acquise à l'instant n dans le domaine des curvelets utilise une transformée en curvelets discrète par USFFT.

6. Procédé selon l'une des revendications 1 à 4, dans lequel l'étape (231) de transformation de l'image $y_n$ acquise à l'instant n dans le domaine des curvelets utilise une transformée en curvelets discrète par wrapping.

7. Procédé selon l'une des revendications précédentes, dans lequel la fonction de seuillage est une fonction de seuillage dur, c'est-à-dire que les coefficients sont annulés s'ils sont inférieurs au troisième seuil prédéterminé, et conservés sinon.

8. Procédé selon la revendication 7, dans lequel le troisième seuil prédéterminé $T_S$ est déterminé par les étapes successives suivantes :

   ■ créer une image Y de mêmes dimensions que l'image $y_n$ acquise à l'instant n et de valeur uniforme 1 sur tous les pixels,
   ■ transformer l'image Y par une transformée de Fourier,
   ■ normaliser l'amplitude F du pic dans la transformée de Fourier de l'image Y par la relation :

$$|F| = \frac{6}{5}\frac{F}{\sqrt{M \times P}}$$

où M et P désignent les dimensions de l'image Y,
   ■ transformer la transformée de Fourier de l'image Y du domaine spatial au domaine des curvelets par une transformation en curvelets, chaque image dans le domaine des curvelets étant représentée par un ensemble de coefficients $c_{j,l,k}^{Y}$,

   ■ déterminer une norme $\hat{c}_{j,l}^{Y}$ des coefficients $c_{j,l,k}^{Y}$ par la relation :

$$\hat{c}_{j,l}^{Y} = \sqrt{\frac{\sum_l \left|c_{j,l,k}^{Y}\right|^2}{M \times P}}$$

où M et P désignent les dimensions de l'image Y et $l$ désigne les orientations des curvelets,
   ■ déterminer le seuil prédéterminé $T_S$ par la relation :

$$T_S = r.\hat{c}_{j,l}^{Y}.\sigma$$

où $\sigma$ est l'écart type du bruit dans l'image $y_n$

acquise à l'instant n et sur laquelle le filtrage temporel (22) a été appliqué, et où le facteur *r* prend la valeur 0 pour l'échelle la plus grossière des curvelets, la valeur 4 pour l'échelle la plus fine, et la valeur 1 pour les autres échelles.

**9.** Procédé selon l'une des revendications 1 à 6, dans lequel la fonction de seuillage applique un seuillage doux aux coefficients dont le module est compris entre le troisième seuil prédéterminé $T_1$ et un quatrième seuil prédéterminé $T_2$, un seuillage dur aux coefficients dont le module est supérieur à un cinquième seuil prédéterminé $T_3$, et un seuillage de transition entre le seuillage doux et le seuillage dur aux coefficients dont le module est compris entre le quatrième seuil prédéterminé $T_2$ et le cinquième seuil prédéterminé $T_3$, les seuils prédéterminés $T_1$, $T_2$, et $T_3$ étant tels que $T_1 < T_2 < T_3$.

**10.** Procédé selon la revendication 9, dans lequel le seuillage de transition est définie par une sigmoïde définie comme suit :

$$f(c_n) = \frac{1}{1 + \exp(-\lambda(c_n - m))}$$

où $c_n$ sont les coefficients devant être seuillés, et où les paramètres $m$ et $\lambda$ sont déterminés comme suit :

$$m = \frac{\ln\left(\frac{T_1}{T_2 - T_1}\right)T_3 - T_2 \cdot \ln(0.01)}{\ln\left(\frac{T_1}{T_2 - T_1}\right) - \ln(0.01)}$$

$$\lambda = \frac{-\ln(0.01)}{T_3 - m}$$

**11.** Procédé selon l'une des revendications 9 et 10, dans lequel l'étape (23) d'application du filtrage spatial comprend, en outre, préalablement à la sous-étape (54) de seuillage :

 ▪ une sous-étape (53) de correction des coefficients en fonction de leur coefficient parent, de leurs coefficients voisins, et/ou de leurs coefficients cousins, le coefficient parent d'un coefficient donné $c_n^D(j,l,k)$ étant le coefficient $c_n^D(j-1,l,k)$ ayant la même orientation et la même position que le coefficient donné à l'échelle plus grossière précédente $j - 1$, ses coefficients voisins étant les coefficients $c_n^D(j,l,k')$ correspondant aux positions contiguës de la position du coefficient donné et ayant la même échelle et la même orientation, les coefficients cousins étant les coefficients ayant la même échelle et la même position que le coefficient donné.

**12.** Procédé selon la revendication 11, dans lequel une première zone de valeurs (61) est définie pour les valeurs inférieures au troisième seuil prédéterminé $T_1$, une deuxième zone de valeurs (62) est définie entre le troisième seuil prédéterminé $T_1$ et le quatrième seuil prédéterminé $T_2$, une troisième zone de valeurs (63) est définie entre le quatrième seuil prédéterminé $T_2$ et le cinquième seuil prédéterminé $T_3$, et une quatrième zone de valeurs (64) est définie pour les valeurs supérieures au cinquième seuil prédéterminé T3, la sous-étape (54) de correction des coefficients appliquant les corrections suivantes :

 ▪ lorsque le module du coefficient considéré $c_n^D(j,l,k)$ se situe soit dans la même zone que le module de son coefficient parent $c_n^D(j-1,l,k)$, soit dans la même zone que la moyenne des modules de ses coefficients voisins $c_n^D(j,l,k')$, le module du coefficient corrigé $\widetilde{c}_n^D(j,l,k)$ prend la valeur du module du coefficient $c_n^D(j,l,k)$,

 ▪ lorsque le module du coefficient parent $c_n^D(j-1,l,k)$ et la moyenne des modules des coefficients voisins $c_n^D(j,l,k')$ se situent dans une même zone, différente de celle du module du coefficient considéré $c_n^D(j,l,k)$, le module du coefficient corrigé $\widetilde{c}_n^D(j,l,k)$ prend la valeur minimale de la zone dans laquelle se situent le module du coefficient parent et la moyenne des modules des coefficients voisins si le module du coefficient considéré $c_n^D(j,l,k)$ se situe dans une zone à plus faibles valeurs, et la valeur maximale de cette zone sinon,

 ▪ lorsque le module du coefficient considéré

$c_n^D\left(j,l,k\right)$, le module de son coefficient parent $c_n^D\left(j-1,l,k\right)$, et la moyenne des modules de ses coefficients voisins $c_n^D\left(j,l,k'\right)$ se situent dans trois zones distinctes, le module du coefficient corrigé $\widetilde{c}_n^D\left(j,l,k\right)$ prend la valeur minimale de la zone dans laquelle se situe la moyenne des modules des coefficients voisins si le module du coefficient considéré $c_n^D\left(j,l,k\right)$ se situe dans une zone à plus faibles valeurs, et la valeur maximale de cette zone sinon.

13. Procédé selon l'une des revendications précédentes, dans lequel l'étape (22) d'application du filtrage temporel sur l'image acquise $x_n$ à l'instant n comprend, à la suite de la sous-étape (221, 223) de détermination de la différence entre la valeur du pixel considéré dans l'image acquise ($x_n$) à l'instant n et la valeur du pixel correspondant dans l'image $y_{n-1}$ acquise à l'instant n-1 sur laquelle le filtrage temporel (22) a été appliqué, la sous-étape supplémentaire suivante :

   ▪ si la différence est comprise entre le premier seuil $S_1$ prédéterminé et le deuxième seuil $S_2$ prédéterminé, corriger (225) la valeur du pixel correspondant avec un troisième ensemble de paramètres.

**Patentansprüche**

1. Verfahren zur Rauschminderung in einer Sequenz fluoroskopischer Bilder, die von einem Röntgendetektor aufgenommen wurden, wobei jedes Bild $x_n$ im räumlichen Bereich einer Pixelmatrix gebildet ist, wobei jedes Pixel einen repräsentativen Wert eines Signalniveaus hat, wobei das Verfahren **dadurch gekennzeichnet ist, dass** es für jedes Bild $x_n$ die folgenden aufeinanderfolgenden Schritte umfasst:

   ▪ Anwenden einer zeitlichen Filterung (22) auf das zu einem Zeitpunkt n aufgenommene Bild $x_n$, wobei die Anwendung der zeitlichen Filterung für jedes Pixel des Bilds die folgenden Unterschritte aufweist:

   - Bestimmen (221, 223) einer Differenz zwischen dem Wert des in dem zum Zeitpunkt n aufgenommenen Bild $x_n$ betrachteten Pixels und dem Wert des entsprechenden Pixels in dem zu einem Zeitpunkt n-1 aufgenommenen Bild $y_{n-1}$, worauf die zeitliche Filterung (22) angewendet wurde,
   - wenn die Differenz kleiner als ein erster vorbestimmter Schwellwert $S_1$ ist, Korrigieren (222) des Werts des entsprechenden Pixels mit einer ersten Parametergruppe,
   - wenn die Differenz größer als ein zweiter vorbestimmter Schwellwert $S_2$ ist, Korrigieren (224) des Werts des entsprechenden Pixels mit einer zweiten Parametergruppe,

   ▪ Anwenden einer räumlichen Filterung (23) auf das zum Zeitpunkt n aufgenommene Bild $y_n$, wobei die Anwendung der räumlichen Filterung die folgenden Unterschritte aufweist:

   - Transformieren (231, 51) des zum Zeitpunkt n aufgenommenen Bilds $y_n$ vom räumlichen Bereich in den Curveletbereich durch eine Curvelettransformation, wobei jedes Bild im Curveletbereich durch eine Koeffizientengruppe dargestellt ist,
   - Verschwellwerten (232, 54) der Koeffizienten des Bilds $y_n$ durch eine Verschwellwertungsfunktion, wobei die Verschwellwertungsfunktion die Koeffizienten unter einem dritten vorbestimmten Schwellwert annulliert und die Koeffizienten über dem dritten vorbestimmten Schwellwert beibehält oder korrigiert,
   - Transformieren (233, 55) des Bilds $y_n$, dessen Koeffizienten vom Curveletbereich in den räumlichen Bereich durch eine umgekehrte Curvelettransformation verschwellwertet wurden.

2. Verfahren nach Anspruch 1, wobei der Transformationsschritt (231) des zum Zeitpunkt n aufgenommenen Bilds $y_n$ in den Curveletbereich eine sechsstufige Curveletstransformierte verwendet.

3. Verfahren nach Anspruch 1, wobei der Transformationsschritt (231) des zum Zeitpunkt n aufgenommenen Bilds $y_n$ in den Curveletbereich eine neunstufige Curveletstransformierte verwendet.

4. Verfahren nach einem der vorangehenden Ansprüche, wobei der Transformationsschritt (231) des zum Zeitpunkt n aufgenommenen Bilds $y_n$ in den Curveletbereich eine Curveletstransformierte verwendet, die 16 Richtungen umfasst.

5. Verfahren nach einem der vorangehenden Ansprüche, wobei der Transformationsschritt (231) des zum Zeitpunkt n aufgenommenen Bilds $y_n$ in den Curveletbereich eine durch USFFT diskrete Curveletstransformierte verwendet.

6. Verfahren nach einem der Ansprüche 1 bis 4, wobei der Transformationsschritt (231) des zum Zeitpunkt n aufgenommenen Bilds $y_n$ in den Curveletbereich eine durch Wrapping diskrete Curveletstransformierte verwendet.

7. Verfahren nach einem der vorangehenden Ansprüche, wobei die Verschwellwertungsfunktion eine harte Verschwellwertungsfunktion ist, das heißt, dass die Koeffizienten annulliert werden, wenn sie unter dem dritten vorbestimmten Schwellwert sind, und anderenfalls beibehalten.

8. Verfahren nach Anspruch 7, wobei der dritte vorbestimmte Schwellwert $T_s$ durch die folgenden aufeinanderfolgenden Schritte bestimmt wird:

  ▪ Kreieren eines Bilds $Y$ mit denselben Abmessungen wie das zum Zeitpunkt n aufgenommene Bild $y_n$ und mit gleichmäßigem Wert 1 auf allen Pixeln,
  ▪ Transformieren des Bilds $Y$ durch eine Fourier-Transformierte,
  ▪ Normieren der Amplitude $F$ der Spitze in der Fourier-Transformierten des Bilds $Y$ durch die Gleichung:

$$|F| = \frac{6}{5}\frac{F}{\sqrt{M \times P}}$$

wobei M und P die Abmessungen des Bilds $Y$ bezeichnen,
  ▪ Transformieren der Fourier-Transformierten des Bilds $Y$ vom räumlichen Bereichs in den Curveletbereich durch eine Curvelettransformation, wobei jedes Bild im Curveletbereich durch eine Koeffizientengruppe $c_{j,l,k}^{Y}$ dargestellt ist,
  ▪ Bestimmen einer Norm $\hat{c}_{j,l}^{Y}$ der Koeffizienten $c_{j,l,k}^{Y}$ durch die Gleichung:

$$\hat{c}_{j,l}^{Y} = \sqrt{\frac{\sum_k \left|c_{j,l,k}^{Y}\right|^2}{M \times P}}$$

wobei M und P die Abmessungen des Bilds $Y$ bezeichnen und $I$ die Richtungen der Curvelets bezeichnet,
  ▪ Bestimmen des vorbestimmten Schwellwerts $T_s$ durch die Gleichung:

$$T_S = r \cdot \hat{c}_{j,l}^{Y} \cdot \sigma$$

wobei $\sigma$ die Standardabweichung des Rau-

schens im zum Zeitpunkt n aufgenommenen Bild $y_n$ ist und auf das die zeitliche Filterung (22) angewendet wurde, und wobei der Faktor $r$ den Wert 0 für die gröbste Skalierung der Curvelets annimmt, den Wert 4 für die feinste Skalierung und den Wert 1 für die anderen Skalierungen.

9. Verfahren nach einem der Ansprüche 1 bis 6, wobei die Verschwellwertungsfunktion eine sanfte Verschwellwertung an die Koeffizienten anlegt, deren Modul zwischen dem dritten vorbestimmten Schwellwert $T_1$ und einem vierten vorbestimmten Schwellwert $T_2$ inbegriffen ist, eine harte Verschwellwertung an die Koeffizienten, deren Modul größer als ein fünfter vorbestimmter Schwellwert $T_3$, und eine Transitionsverschwellwertung zwischen der sanften Verschwellwertung und der harten Verschwellwertung an die Koeffizienten, deren Modul zwischen dem vierten vorbestimmten Schwellwert $T_2$ und dem fünften vorbestimmten Schwellwert $T_3$ inbegriffen ist, wobei die vorbestimmten Schwellwerte $T_1$, $T_2$ und $T_3$ so wie $T_1 < T_2 < T_3$ sind.

10. Verfahren nach Anspruch 9, wobei die Transitionsverschwellwertung von einem wie folgt definierten Sigmoid bestimmt ist:

$$f(c_n) = \frac{1}{1 + \exp(-\lambda(c_n - m))}$$

wobei $C_n$ die Koeffizienten sind, die zu verschwellwerten sind, und wobei die Parameter $m$ und $\lambda$ wie folgt bestimmt sind:

$$m = \frac{\ln\left(\frac{T_1}{T_2 - T_1}\right)T_3 - T_2 \cdot \ln(0.01)}{\ln\left(\frac{T_1}{T_2 - T_1}\right) - \ln(0.01)}$$

$$\lambda = \frac{-\ln(0.01)}{T_3 - m}$$

11. Verfahren nach einem der Ansprüche 9 und 10, wobei der Anwendungsschritt (23) der räumlichen Filterung vor dem Verschwellwertungs-Unterschritt (54) ferner umfasst:

  ▪ einen Korrektur-Unterschritt (53) der Koeffizienten in Abhängigkeit von ihrem Elternkoeffizienten, von ihren Nachbarkoeffizienten und/oder von ihren Cousinkoeffizienten, wobei der Elternkoeffizient eines gegebenen Koeffizienten $c_n^p(j,l,k)$ der Koeffizient $c_n^p(j-1,l,k)$ mit derselben Richtung und derselben Position wie der gegebene Koeffizient in vorangehender gröberer Skalierung *j* - 1 ist, wobei seine Nachbarkoeffizienten die entsprechenden Koeffizienten $\bar{c}_n^p(j,l,k')$ an den anliegenden Positionen der Position des gegebenen Koeffizienten sind und dieselbe Skalierung und dieselbe Richtung haben, wobei die Cousinkoeffizienten die Koeffizienten sind, die dieselbe Skalierung und dieselbe Position wie der gegebene Koeffizient haben.

12. Verfahren nach Anspruch 11, wobei ein erster Wertebereich (61) für die kleineren Werte als der dritte vorbestimmte Schwellwert $T_1$ definiert ist, ein zweiter Wertebereich (62) zwischen dem dritten vorbestimmten Schwellwert $T_1$ und dem vierten vorbestimmten Schwellwert $T_2$ definiert ist, ein dritter Wertebereich (63) zwischen dem vierten vorbestimmten Schwellwert $T_2$ und dem fünften vorbestimmten Schwellwert $T_3$ definiert ist und ein vierter Wertebereich (64) für größere Werte als der fünfte vorbestimmte Schwellwert $T_3$ definiert ist, wobei der Korrekturunterschritt (54) der Koeffizienten die folgenden Korrekturen anwendet:

- wenn sich das Modul des betroffenen Koeffizienten $c_n^p(j,l,k)$ entweder im selben Bereich wie das Modul seines Elternkoeffizienten $c_n^p(j-1,l,k)$ oder im selben Bereich wie der Durchschnitt der Module seiner Nachbarkoeffizienten $c_n^p(j,l,k')$ befindet, nimmt das Modul des korrigierten Koeffizienten $\tilde{c}_n^p(j,l,k)$ den Wert des Moduls des Koeffizienten $c_n^p(j,l,k)$ an,
- wenn sich das Modul des Elternkoeffizienten $c_n^p(j-1,l,k)$ und der Durchschnitt der Module der Nachbarkoeffizienten $c_n^p(j,l,k')$ in einem selben Bereich befinden, der von dem des Moduls des betroffenen Koeffizienten $c_n^p(j,l,k)$ unterschiedlich ist, nimmt das Modul des korrigierten Koeffizienten $\tilde{c}_n^p(j,l,k)$ den minimalen Wert des Bereichs an, in dem sich das Modul des Elternkoeffizienten und der Durchschnitt der Module der Nachbarkoeffizienten befinden, wenn sich das Modul des betroffenen Koeffizienten $c_n^p(j,l,k)$ in einem Bereich mit niedrigeren Werten befindet, und anderenfalls den maximalen Wert dieses Bereichs,
- wenn sich das Modul des betroffenen Koeffizienten $c_n^p(j,l,k)$, das Modul seines Elternkoeffizienten $c_n^p(j-1,l,k)$ und der Durchschnitt der Module seiner Nachbarkoeffizienten $c_n^p(j,l,k')$ in drei unterschiedlichen Bereichen befinden, nimmt das Modul des korrigierten Koeffizienten $\tilde{c}_n^p(j,l,k)$ den minimalen Wert des Bereichs an, in dem sich der Durchschnitt der Module der Nachbarkoeffizienten befindet, wenn sich das Modul des betroffenen Koeffizienten $c_n^p(j,l,k)$ in einem Bereich mit niedrigeren Werten befindet, und anderenfalls den maximalen Wert dieses Bereichs.

13. Verfahren nach einem der vorangehenden Ansprüche, wobei der Anwendungsschritt (22) der zeitlichen Filterung auf das zum Zeitpunkt n aufgenommene Bild $x_n$ nach dem Unterschritt (221, 223) der Bestimmung der Differenz zwischen dem Wert des in dem zum Zeitpunkt n aufgenommenen Bild $x_n$ betrachteten Pixels und dem Wert des entsprechenden Pixels in dem zum Zeitpunkt n-1 aufgenommenen Bilds $y_{n-1}$, worauf die zeitliche Filterung (22) angewendet wurde, den folgenden zusätzlichen Unterschritt umfasst:

- wenn die Differenz zwischen dem ersten vorbestimmten Schwellwert $S_1$ und dem zweiten vorbestimmten Schwellwert $S_2$ liegt, Korrigieren (225) des Werts des entsprechenden Pixels mit einer dritten Parametergruppe.

**Claims**

1. A method for reducing noise in a sequence of fluoroscopic images acquired by an X-ray detector, each image ($x_n$) being formed in the spatial domain by a matrix of pixels, each pixel having a value representative of a signal level, the method comprising the following successive steps for each image ($x_n$) :

- applying temporal filtering (22) to the image ($x_n$) acquired at an instant n, the application of said temporal filtering comprising the following substeps for each pixel of the image:

- determining (221, 223) a difference between the value of the pixel considered in the image ($x_n$) acquired at the instant n and the value of the corresponding pixel in the image ($y_{n-1}$) acquired at an instant n-1 to which the temporal filtering (22) has been applied,
- if the difference is below a first predetermined threshold $S_1$, correcting (222) the value of the corresponding pixel with a first set of parameters,
- if the difference is above a second predetermined threshold $S_2$, correcting (224) the value of the corresponding pixel with a second set of parameters,

- applying spatial filtering (23) to the image ($y_n$) acquired at the instant n, the application of said spatial filtering comprising the following substeps:

- transforming (231, 51) the image ($y_n$) acquired at the instant n from the spatial domain into the curvelet domain using a curvelet transform, each image in the curvelet domain being represented by a set of coefficients,
- thresholding (232, 54) the coefficients of the image ($y_n$) using a thresholding function, the thresholding function cancelling the coefficients below a third predetermined threshold, and preserving or adjusting the coefficients above the third predetermined threshold,
- transforming (233, 55) the image ($y_n$) whose coefficients have been thresholded from the curvelet domain into the spatial domain using an inverse curvelet transform.

2. The method as claimed in claim 1, wherein the step (231) of transforming the image ($y_n$) acquired at the instant n into the curvelet domain uses a curvelet transform with 6 scales.

3. The method as claimed in claim 1, wherein the step (231) of transforming the image ($y_n$) acquired at the instant n into the curvelet domain uses a curvelet transform with 9 scales.

4. The method as claimed in one of the preceding claims, wherein the step (231) of transforming the image ($y_n$) acquired at the instant n into the curvelet domain uses a curvelet transform comprising 16 orientations.

5. The method as claimed in one of the preceding claims, wherein the step (231) of transforming the image ($y_n$) acquired at the instant n into the curvelet domain uses a discrete curvelet transform via USFFT.

6. The method as claimed in one of claims 1 to 4, wherein the step (231) of transforming the image ($y_n$) acquired at the instant n into the curvelet domain uses a discrete curvelet transform via wrapping.

7. The method as claimed in one of the preceding claims, wherein the thresholding function is a hard thresholding function, i.e. the coefficients are cancelled if they are below the third predetermined threshold, and preserved otherwise.

8. The method as claimed in claim 7, wherein the third predetermined threshold $T_S$ is determined by the following successive steps:

- creating an image $Y$ of the same dimensions as the image ($y_n$) acquired at the instant n and of uniform value 1 over all pixels,
- transforming the image $Y$ using a Fourier transform,
- normalizing the amplitude $F$ of the peak in the Fourier transform of the image $Y$ using the relationship:

$$|F| = \frac{6}{5}\frac{F}{\sqrt{M \times P}}$$

where M and P denote the dimensions of the image $Y$,
- transforming the Fourier transform of the image $Y$ from the spatial domain into the curvelet domain using a curvelet transform, each image in the curvelet domain being represented by a set of coefficients $c_{j,l,k}^{Y}$,

- determining a norm $\hat{c}_{j,l}^{Y}$ for the coefficients $c_{j,l,k}^{Y}$ using the relationship:

$$\hat{c}_{j,l}^{Y} = \sqrt{\frac{\sum_{l}\left|c_{j,l,k}^{Y}\right|^2}{M \times P}}$$

where M and P denote the dimensions of the image $Y$ and $l$ denotes the orientations of the curvelets,
- determining the predetermined threshold $T_S$ using the relationship:

$$T_S = r.\,\hat{c}_{j,l}^{Y}.\,\sigma$$

where σ is the standard deviation of the noise in the image ($y_n$) acquired at the instant n and to which the temporal filtering (22) has been applied, and where the factor r takes the value 0 for the coarsest scale of the curvelets, the value 4 for the finest scale and the value 1 for the other scales.

9. The method as claimed in one of claims 1 to 6, wherein the thresholding function applies soft thresholding to the coefficients whose modulus lies between the third predetermined threshold $T_1$ and a fourth predetermined threshold $T_2$, hard thresholding to the coefficients whose modulus is above a fifth predetermined threshold $T_3$ and transition thresholding between the soft thresholding and the hard thresholding to the coefficients whose modulus lies between the fourth predetermined threshold $T_2$ and the fifth predetermined threshold $T_3$, the predetermined thresholds $T_1$, $T_2$ and $T_3$ being such that $T_1 < T_2 < T_3$.

10. The method as claimed in claim 9, wherein the transition thresholding is defined by a sigmoid defined as follows:

$$f(c_n) = \frac{1}{1 + \exp(-\lambda(c_n - m))}$$

where $c_n$ are the coefficients that need to be thresholded, and where the parameters $m$ and $\lambda$ are determined as follows:

$$m = \frac{\ln\left(\frac{T_1}{T_2 - T_1}\right)T_3 - T_2 . \ln(0.01)}{\ln\left(\frac{T_1}{T_2 - T_1}\right) - \ln(0.01)}$$

$$\lambda = \frac{-\ln(0.01)}{T_3 - m}.$$

11. The method as claimed in either of claims 9 and 10, wherein the step (23) of applying spatial filtering furthermore comprises, prior to the thresholding substep (54):

   ▪ a substep (53) of correcting the coefficients as a function of their parent coefficient, of their neighbor coefficients and/or of their cousin coefficients, the parent coefficient of a given coefficient $c_n^D(j,l,k)$ being the coefficient $c_n^D(j-1,l,k)$ having the same orientation and the same position as the given coefficient on the previous coarsest scale $j$ - 1, its neighbor coefficients being the coefficients $c_n^D(j,l,k')$ corresponding to the contiguous positions for the position of the given coefficient and having the same scale and the same orientation, the cousin coefficients being the coefficients having the same scale and the same position as the given coefficient.

12. The method as claimed in claim 11, wherein a first range of values (61) is defined for the values below the third predetermined threshold $T_1$, a second range of values (62) is defined between the third predetermined threshold $T_1$ and the fourth predetermined threshold $T_2$, a third range of values (63) is defined between the fourth predetermined threshold $T_2$ and the fifth predetermined threshold $T_3$ and a fourth range of values (64) is defined for the values above the fifth predetermined threshold T3, the substep (54) of correcting the coefficients applying the following corrections :

   ▪ when the modulus of the coefficient in question $c_n^D(j,l,k)$ is situated either in the same range as the modulus of its parent coefficient $c_n^D(j-1,l,k)$ or in the same range as the average of the moduli of its neighbor coefficients $c_n^D(j,l,k')$, the modulus of the corrected coefficient $\tilde{c}_n^D(j,l,k)$ takes the value of the modulus of the coefficient $c_n^D(j,l,k)$,

   ▪ when the modulus of the parent coefficient $c_n^D(j-1,l,k)$ and the average of the moduli of the neighbor coefficients $c_n^D(j,l,k')$ are situated in the same range, different from that of the modulus of the coefficient in question $c_n^D(j,l,k)$, the modulus of the corrected coefficient $\tilde{c}_n^D(j,l,k)$ takes the minimum value from the range in which the modulus of the parent coefficient and the average of the moduli of the neighbor coefficients are situated if the modulus of the coefficient in question $c_n^D(j,l,k)$ is situated in a range with lower values, and the maximum value from this range otherwise,

   ▪ when the modulus of the coefficient in question $c_n^D(j,l,k)$, the modulus of its parent coefficient $c_n^D(j-1,l,k)$ and the average of the moduli of its neighbor coefficients $c_n^D(j,l,k')$ are situated in three separate ranges, the modulus of the corrected coefficient $\tilde{c}_n^D(j,l,k)$

takes the minimum value from the range in which the average of the moduli of the neighbor coefficients is situated if the modulus of the coefficient in question $\overline{c_n^D(j,l,k)}$ is situated in a range with lower values, and the maximum value from this range otherwise.

**13.** The method as claimed in one of the preceding claims, wherein the step (22) of applying the temporal filtering to the image acquired ($x_n$) at the instant n comprises, following the substep (221, 223) of determining the difference between the value of the pixel in question in the image ($x_n$) acquired at the instant n and the value of the corresponding pixel in the image ($y_{n-1}$) acquired at the instant n-1 to which the temporal filtering (22) has been applied, the following additional substep:

- if the difference lies between the first predetermined threshold $S_1$ and the second predetermined threshold $S_2$, correcting (225) the value of the corresponding pixel with a third set of parameters.

FIG.1

FIG.2

FIG.3A

FIG.3B

FIG.4

$\downarrow y_n$

| | |
|---|---|
| Transformation de l'image dans le domaine des curvelets | $\curlywedge$ 51 |

$\downarrow c_n$

| | |
|---|---|
| Détermination des seuils $T_1$, $T_2$ et $T_3$ | $\curlywedge$ 52 |

$\downarrow$

| | |
|---|---|
| Correction des coefficients des transformées en curvelets | $\curlywedge$ 53 |

$\downarrow \widetilde{c}_n$

| | |
|---|---|
| Seuillage des coefficients des transformées en curvelets | $\curlywedge$ 54 |

$\downarrow \hat{c}_n$

| | |
|---|---|
| Transformation de l'image dans le domaine spatial | $\curlywedge$ 55 |

$\downarrow z'_n$

# FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6314160 B1

**Littérature non-brevet citée dans la description**

- Adaptive spatio-temporal denoising of fluoroscopic X-ray sequences. **TOMIC M. et al.** Biomedical Signal Processing and Control. Elsevier, 05 Mars 2011, vol. 7, 173-179
- **E. CANDÈS ; DEMANET L. ; DONOHO D. ; YING L.** Fast Discrete Curvelet Transforms. *Multiscale Model. Simul.,* 2006, vol. 5 (3), 861-899
- **D.L. DONOHO ; JOHNSTONE, I.M.** Ideal spatial adaptation via wavelet shrinkage. *Biometrica,* 1994, vol. 81, 425-455
- **J.L. STARCK ; CANDÈS I.J. ; DONOHO L.** The Curvelet Transform for Image Denoising. *IEEE Transactions on Image Processing,* 2002, vol. 11 (6), 670-684